Europäisches Patentamt

(19) European Patent Office

Office européen des brevets

(11) Publication number: **0 012 568**
**B1**

(12) # EUROPEAN PATENT SPECIFICATION

(45) Date of publication of patent specification: **04.08.82**

(51) Int. Cl.³: **B 62 M 9/10**

(21) Application number: **79302803.6**

(22) Date of filing: **06.12.79**

(54) **Multi-speed sprocket assembly.**

(30) Priority: **12.12.78 JP 171205/78 U**

(43) Date of publication of application:
**25.06.80 Bulletin 80/13**

(45) Publication of the grant of the patent:
**04.08.82 Bulletin 82/31**

(84) Designated Contracting States:
**BE DE FR GB IT**

(56) References cited:
**CH - A - 558 485**
**FR - A - 2 157 287**
**FR - A - 2 317 108**
**FR - A - 2 334 557**
**FR - A - 2 352 225**
**US - A - 3 900 088**

(73) Proprietor: **SHIMANO INDUSTRIAL COMPANY LIMITED**
**77, 3-cho Oimatsu-cho Sakai-shi**
**Osaka (JP)**

(72) Inventor: **Sugimoto, Kazuo**
**No. 205, 11-2, 1-cho Miharadai**
**Sakai-shi Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Multi-speed sprocket assembly

This invention relates to a multi-speed sprocket assembly, comprising a cylindrical member, a sprocket sub-assembly mounted on the outer periphery of said cylindrical member, and retaining means provided between said cylindrical member and said sprocket sub-assembly for preventing axial movement of said sprocket sub-assembly relative to said cylindrical member; said cylindrical member having on its outer periphery a plurality of retaining grooves extending axially of said cylindrical member; said sprocket sub-assembly having two or more sprockets having different numbers of teeth, one or more ring shaped washers being positioned between the sprockets for maintaining them in a predetermined spaced relationship and coupling means for coupling said sprockets with said washers; each of said sprockets having a central bore for receiving therethrough the outer periphery of said cylindrical member and being provided at its inner periphery with a plurality of projections engageable with said retaining grooves.

FR—A—2 352 225 discloses such an assembly in which the retaining means comprises an engagement groove extending circumferentially around said cylindrical member and an engagement means resiliently engageable with said engagement groove, the engagement means comprising a retaining ring which is supported only in the engagement groove.

With such a retaining means for securing the sprocket sub-assembly on the cylindrical member it is relatively difficult and troublesome to remove the sub-assembly from the cylindrical member, especially in use of the sub-assembly with the cylindrical member mounted in situ on a hub.

It is an object of the present invention to overcome this problem and to provide a multi-speed sprocket assembly capable of facilitating coupling or removal of the sprockets to or from the cylindrical member.

The present invention provides a multispeed sprocket assembly comprising a cylindrical member, a sprocket sub-assembly mounted on the outer periphery of said cylindrical member, and retaining means provided between said cylindrical member and said sprocket sub-assembly for preventing axial movement of said sprocket sub-assembly relative to said cylindrical member; said cylindrical member having on its outer periphery a plurality of retaining grooves extending axially of said cylindrical member; said sprocket sub-assembly having two or more sprockets having different numbers of teeth, one or more ring shaped washers being positioned between the sprockets for maintaining them in a predetermined spaced relationship and coupling means for coupling said sprockets with said washers; each of said sprockets having a central bore for receiving therethrough the outer periphery of said cylindrical member and being provided at its inner periphery with a plurality of projections engageable with said retaining grooves; and said retaining means comprising an engagement groove extending circumferentially around said cylindrical member and an engagement means resiliently engageable with said engagement groove characterized in that said engagement groove is provided on one of said cylindrical member and the sprocket sub-assembly, and said engagement means is provided on the other of said cylindrical member and sprocket sub-assembly, said other of said cylindrical member and sprocket sub-assembly being provided with peripherally spaced-apart radially-extending apertures formed and disposed so that respective portions of said engagement means project through said apertures, in use of the assembly for engagement with said engagement groove to retain said sprocket sub-assembly in position on said cylindrical member so as to be axially immovable relative to said cylindrical member and so that said engagement means may be disengaged from said engagement groove for removing said sprocket sub-assembly from said cylindrical member by overcoming the resilient engagement forces.

It is preferable that the engagement groove of the retaining means is formed on the outer periphery of the cylindrical member and the engagement means is provided on the sprocket sub-assembly, for example, on the washer thereof. The engagement means may be formed of resiliently deformable wire, part of which resiliently engages the engagement groove. Alternatively the engagement means may have a generally C-shaped ring of resiliently deformable wire disposed so as to hold engagement blocks in resilient engagement with the engagement groove.

With the present invention, the sprocket sub-assembly is quickly mountable in a simple operation so as to be axially immovable on the cylindrical member through engagement of the engagement means with the engagement groove, and is similarly easily and quickly removable from the cylindrical member by overcoming the resilient engagement forces.

These and other objects and novel features of the invention will be more apparent from the following description given by way of example of some preferred embodiments of the invention illustrated with reference to the accompanying drawings, in which:—

Figure 1 is a partially sectioned front elevation of a first embodiment of a multi-speed sprocket assembly of the invention;

Figure 2 is a perspective detail view showing a washer carrying an engagement means;

Figure 3 is a sectional view taken on the line III—III in Figure 1; and

Figures 4 and 5 are sectional views corresponding to Figure 3 of two further modified, embodiments.

Referring to the drawings, there is shown a cylindrical member 1 which is provided at its outer periphery with a plurality of retaining grooves 11 extending axially with respect to the cylindrical member and one engagement groove 12 extending circumferentially thereof and contiguous with the retaining grooves 11. The engagement groove 12 together with an engagement means 5 to be hereinafter further described constitute retaining means. In this embodiment the engagement groove 12 is formed on the cylindrical member 1 as shown in the embodiment, but could instead be provided on a sprocket sub-assembly A to be described herebelow.

The cylindrical member 1 serves as a drive member in a multi-speed freewheel assembly and has at its inner periphery ratchet teeth 13 in mesh with pawls on a driven member (not shown) in the freewheel assembly. Ball races 14 and 15 are provided at both axial sides of the ratchet teeth 13.

A plurality of sprockets 2 are mounted on the cylindrical member 1. The sprockets 2 differ in diameter and have different numbers of teeth on their outer peripheries. A central bore extends through each sprocket 2 and fits onto the outer periphery of the cylindrical member 1, said central bore having at its inner periphery a plurality of projections 21 engageable with the retaining grooves 11 on said outer periphery of said cylindrical member 1.

The sprockets 2 are spaced from each other at regular intervals by washers 3 of ring-like shape and are coupled together by coupling means 4, such as bolts and nuts or caulking pins to thereby form a sprocket sub-assembly A.

The sprocket sub-assembly A is provided with the engagement means 5 which, together with the engagement groove 12, constitute the retaining means.

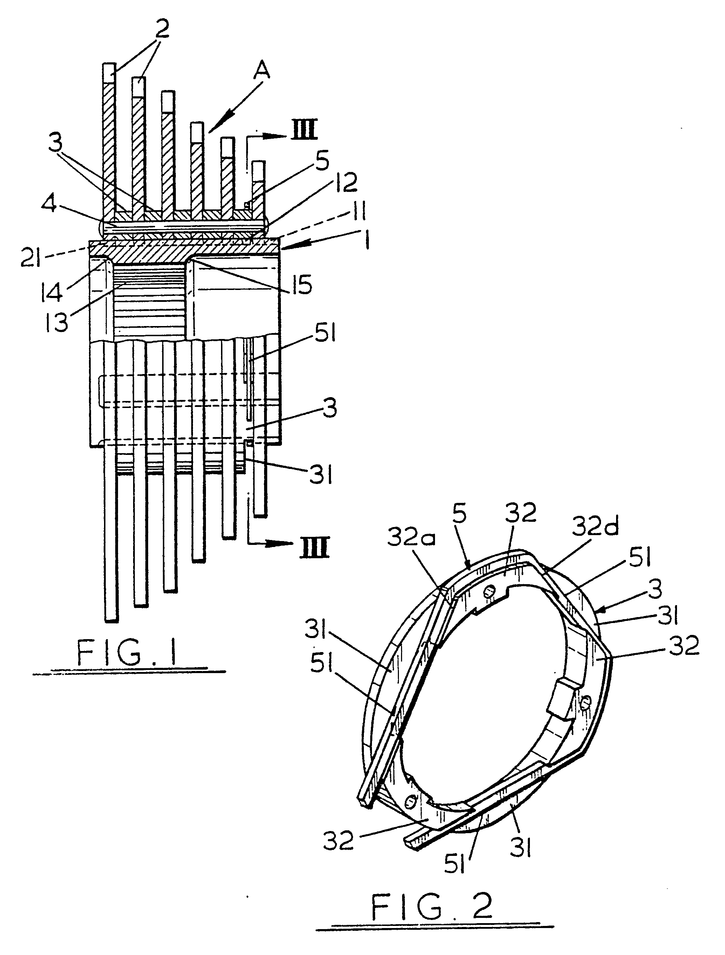

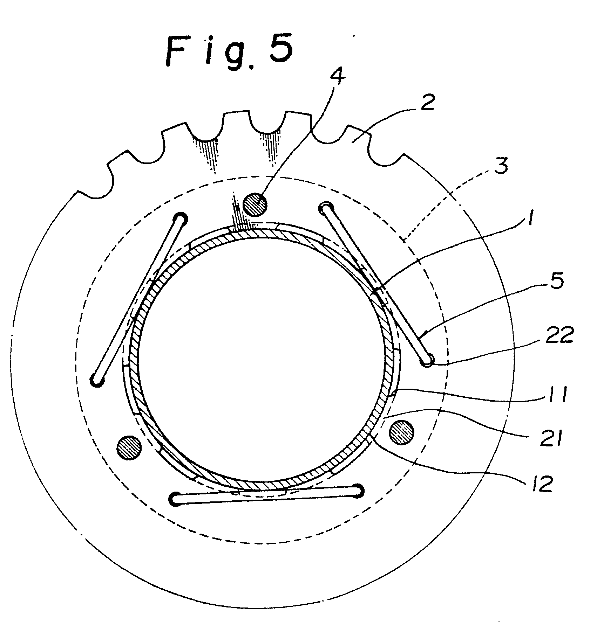

The engagement means 5 is adapted to resiliently engage the engagement groove 12 and to be disengageable therefrom against the resilient engagement forces. Also, the engagement means 5, when engagement groove 12 is formed on the cylindrical member 1, is provided on the sprocket sub-assembly A as shown, whilst, when the engagement groove is formed on the sprocket sub-assembly A, the engagement means is provided on the cylindrical member 1. In the former case, the engagement means 5 is provided on one washer 3 as shown in Figures 1 to 3, or on one sprocket 2 as shown in Figure 5. The washer 3, when carrying the engagement means 4, is constituted by thin portions 31 each smaller in thickness than the gap between the sprockets 2, and by spacing control portions 32 circumferentially disposed at regular intervals between the thin portions 31. The spacing control portions 32 are thicker and have in fact a thickness corresponding to the gap between the sprockets 2, and each has a holding face 32a adjacent a respective thin portion 31. In other words said washer 3 has a plurality of axially extending spacing control portions spaced from each other at regular intervals so as to define radially extending apertures therebetween.

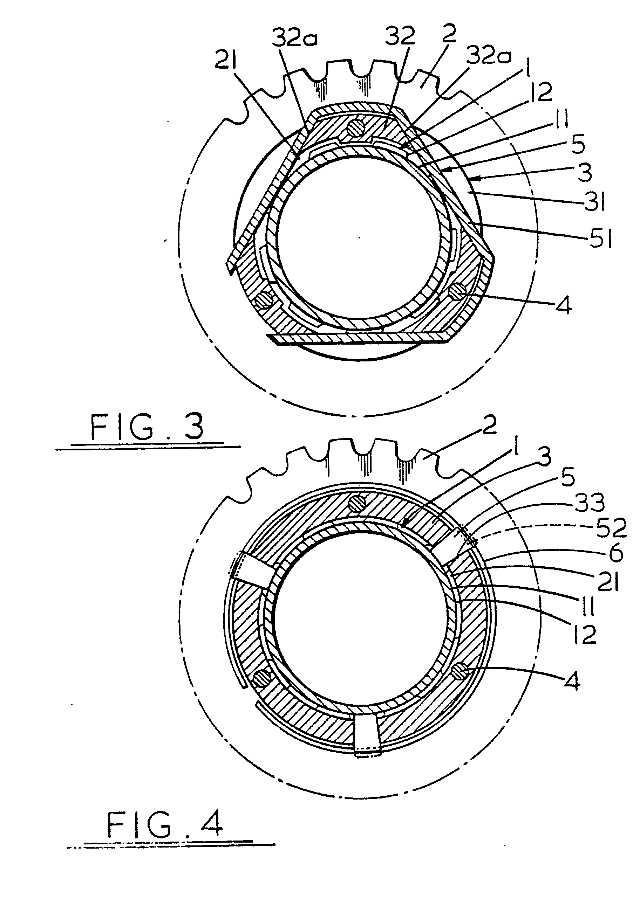

The engagement means 5, as shown in Figures 2 and 3, is formed of a resiliently deformable wire, and has a plurality of straight portions 51 (three straight portions are shown) interconnecting neighbouring holding faces 32a, and is discontinuous at only one point. It is held in position resiliently on the spacing control portions 32. The straight portions 51, when the wire is held on the interval control portions 32, are positioned on the thin portions 31 and extend inwardly from the inner periphery thereof in chord-like manner, so that the inwardly projecting portions project radially inwardly through the apertures to engage with the engagement groove 12 on the outer periphery of the cylindrical member 1.

In the above described construction, the sprocket sub-assembly A is mounted on the outer periphery of the cylindrical member 1 with engagement of the inner periphery projections 21 of each sprocket 2 with the axial retaining grooves 11, so that the sprockets 2 are mounted so as to be circumferentially non-rotatable relative to the cylindrical member 1.

During mounting of the sprocket sub-assembly A on the cylindrical member 1, the straight portions 51 of the engagement means 5 held on the washer 3 project radially inwardly from the outer periphery of the cylindrical member 1 in chord-like manner to engage the axial end face thereof. The engagement means 5, which is formed of the resiliently deformable wire and which has a substantially triangular form which is open at one corner portion so as to be expandable to increase its internal diameter, is then expanded to permit mounting of the sprocket sub-assembly A on the cylindrical member 1. As the engagement means 5 reaches the engagement groove 12 it automatically locates therein, contracting as it does to a smaller internal diameter. Thus, engagement of the engagement member 5 with the engagement groove 5 and that of the respective inner periphery projections 21 with the retaining grooves 11, can secure the sprocket sub-assembly A on the cylindrical member 1 so as to be both axially and circumferentially immovable.

The sprocket sub-assembly A is easily removable from the cylindrical member 1 by inserting a rod like member into one retaining groove 11 to displace the engagement means 5, resiliently expanding it radially outwardly, so that the engagement member 5 disengages from the engagement groove 12 whereupon the sprocket sub-assembly A together with the rod-like coupling member 4 may be moved axially (to the right in Figure 1 of the cylindrical member 1.

In addition, the engagement groove 12 tapers inwardly towards its base, its opposed side walls being inclined towards each other as shown in Figure 1 to thereby ensure the engagement of the engagement means 5 with the engagement groove 12 and avoid any axial backlash of the sprocket sub-assembly A.

As an alternative, the engagement means 5 could, when provided on one sprocket 2, be formed as a plurality of resiliently deformable wires, with supporting bores 22 therefor provided on the sprocket 2 as shown in Figure 5. The wires 5 are inserted at each end thereof in a respective bore 22 and supported therein in such a manner that an intermediate portion of each wire of the engagement member 5 projects radially inwardly, in generally chord-like manner, from the inner periphery of the sprocket 2 to thereby engage with the engagement groove 12.

The engagement means 5 shown in Figures 1 to 3 and 5, are formed, themselves, as resiliently deformable members. As a further alternative though, a resilient deformable member, such as a snap ring 6, which is formed separately from the engagement portion(s) of the engagement means 5, may be formed as shown in Figure 4 for elastically holding said engagement portions in engagement with the engagement groove 12. Thus it is merely sufficient for the engagement portions to be held resiliently in engagement with the engagement groove 12.

Such a modified embodiment is shown in Figure 4 in which the washer 3 is provided with a plurality of apertures in the form of radially extending through bores 33, and the engagement means 5 comprises a plurality of blocks greater in length than the respective through bores 33, each block having at one end a groove 52, and a generally C-shaped snap ring 6 surrounding the outer periphery of the washer 3 and fitting into the grooves 52 in the blocks 5, whereby the engagement means 5 is resiliently held in engagement with the engagement groove 12, the snap ring 6 biasing the blocks 5 radially inwards.

In this construction the snap ring 6 is expandable in diameter to allow the engagement means 5 to permit engagement or disengagement from the engagement groove 12. By this means, disengagement of the engagement means 5 from the engagement groove 12 facilitates quick removal of the sprocket assembly A from the cylindrical member 1.

In addition the engagement groove 12 shown in Figure 4 tapers radially inwardly, the opposed side walls sloping towards each other towards the base of said groove 12, so that when the sprocket sub-assembly A is strongly axially biased the engagement blocks 5 are forced radially outwardly of the washer 3 as they move along the sloping side walls of the engagement grooves 12 thereby causing the snap ring 6 to automatically expand in diameter. Thus, the sprocket assembly A is particularly easily removable from the cylindrical member 1.

As a further alternative, the engagement grooves 12 and the engagement means 5 could be provided on the cylindrical member 1 and the sprocket sub-assembly A. Whilst the sprocket assembly of the invention is primarily intended for a freewheel at the rear hub of a bicycle, it is also applicable to multi-speed sprockets at the crank means of a cycle.

As will be clearly understood from the above description, the multi-speed sprocket assembly of the invention is so constructed that a plurality of sprockets are coupled with each other by coupling means to form a sprocket sub-assembly, the sprocket sub-assembly being mounted on the cylindrical member, so as to be axially immovable, by means of resilient engagement of the engagement means with the engagement groove(s). Thus, the sprocket sub-assembly may be simply mountable on the cylindrical member and is readily removable therefrom, and the mounted sprocket sub-assembly is axially and circumferentially immovable with respect to the cylindrical member.

**Claims**

1. A multi-speed sprocket assembly comprising a cylindrical member (1), a sprocket sub-assembly (2—4) mounted on the outer periphery of said cylindrical member (1), and retaining means (5, 6, 12) provided between said cylindrical member (1) and said sprocket sub-assembly (2—4) for preventing axial movement of said sprocket sub-assembly (2—4) relative to said cylindrical member (1); said cylindrical member (1) having on its outer periphery a plurality of retaining grooves (11) extending axially of said cylindrical member (1); said sprocket sub-assembly (2—4) having two or more sprockets (2) having different numbers of teeth, one or more ring shaped washers (3) being positioned between the sprockets (2) for maintaining them in a predetermined spaced relationship and coupling means (4) for coupling said sprockets (2) with said washers (3); each of said sprockets (2) having a central bore for receiving therethrough the outer periphery of said cylindrical member (1) and being provided at its inner periphery with a plurality of projections (21) engageable with said retaining grooves (11); and said retaining means (5, 6, 12) comprising an engagement groove (12) extending circumferentially around said cylindrical member (1) and an engagement means (5, 6) resiliently engageable with said engagement groove (12) characterized in that said engagement groove (12) is provided on one of said cylindrical member (1) and the sprocket sub-assembly (2—4), and said engagement means (5, 6) is provided on the other of said cylindrical member (1) and sprocket sub-assembly (2—4), said other of said cylindrical member (1) and sprocket sub-assembly (2—4) being provided with peripherally spaced-apart radially-extending apertures (33) formed and disposed so that respective portions (51) of said engagement means project through said apertures (33), in use of the assembly (5. 6) for engagement with said engagement groove (12) to retain said sprocket sub-assembly (2—4) in position on said cylindrical member (1) so as to be axially immovable relative to said cylindrical member (1) and so that said engagement means (5, 6) may be disengaged from said engagement groove (12) for removing said sprocket sub-assembly (2—4) from said cylindrical member (1) by overcoming the resilient engagement forces.

2. A multi-speed sprocket assembly according to Claim 1, wherein said engagement groove (12) is provided on the outer periphery of said cylindrical member (1) and said engagement means (5, 6) is provided on said sprocket sub-assembly (2--4).

3. A multi-speed sprocket assembly according to Claim 2, wherein said engagement means comprises a resiliently deformable wire (5) and is supported on one washer (3) of said sprocket sub-assembly (2—4).

4. A multi-speed sprocket assembly according to Claim 3 wherein the sprocket sub-assembly (2—4) includes a plurality of thin washers, one of said washers constituting said one washer (3) on which said engagement means is supported having a thickness less than the spacing between neighbouring sprockets (2) of said sprocket sub-assembly (2—4) and having a plurality of axially extending spacing control portions (32) spaced from each other at regular intervals so as to define said radially extending apertures (33) therebetween, said spacing control portions (32) each having holding faces (32a) at each end for supporting part of said engagement means (5), said engagement means (5) having a plurality of straight portions (51) for engaging respective ones of said holding faces (32a), said straight portions (51) being interconnected so as to form a substantially closed member which is continuous except for one portion and extends around said plurality of spacing control portions (32) with end portions of said straight portions (51) held resiliently against said holding faces (32a) of said spacing control portions (32) and intermediate portions of said straight portions (51) projecting radially inwardly through said apertures (33) and from the inner periphery of said washer (3), said projecting intermediate portions of the straight portions (51) engaging said engagement groove (12) of said cylindrical member (1).

5. A multi-speed sprocket assembly according to Claim 2, wherein said engagement means (5, 6) comprises a plurality of resiliently deformable wires (5) supported on one sprocket (3) of said sprocket sub-assembly (2—4).

6. A multi-speed sprocket assembly according to Claim 2, wherein said engagement means comprises a plurality of engagement blocks resiliently held in position on said washer (3) of said sprocket sub-assembly (2—4).

7. A multi-speed sprocket assembly according to Claim 6, wherein said apertures comprise a plurality of through bores (33) extending radially through said washer (3), each of said engagement blocks (5) being greater in length than each of said through bores (33) and being supported so as to be freely movable therein, and a generally C-shaped snap ring (6) of resiliently deformable wire is disposed around said washer (3) for engagement with the radially outer surface of each of said engagement blocks (5) and biasing each of said engagement blocks (5) radially inwardly of said washer (3) so that each of said engagement blocks engages with its radially innermost end, the engagement groove (12) provided around said cylindrical member (1).

8. A multi-speed sprocket assembly according to any one of Claims 2 to 7, wherein said engagement groove (12) provided around said cylindrical member (1) has sloping opposed side walls so that said groove (12) is tapered inwardly towards its base.

**Revendications**

1. Ensemble de pignons de chaîne à plusieurs vitesses comprenant une pièce cylindrique (1), un sous-ensemble de pignons (2—4) monté sur la périphérie extérieure de la pièce cylindrique (1), et des moyens de retenue (5, 6, 12) prévus entre la pièce cylindrique (1) et le sous-ensemble de pignons (2—4) pour empêcher le mouvement axial du sous-ensemble de pignons (2—4) par rapport à la pièce cylindrique (1); la pièce cylindrique (1) comportant sur sa périphérie extérieure une pluralité de gorges de retenue (11) disposées suivant l'axe de la pièce cylindrique (1); le sous-ensemble de pignons (2—4) comportant deux pignons (2) ou davantage ayant des nombres de dents différents, une ou plusieurs rondelles annulaires (3) étant placées entre les pignons (2) pour les maintenir à un intervalle prédéterminé et des moyens de liaison (4) étant prévus pour accoupler les pignons (2) et les rondelles (3); chacun des pignons (2) comportant un alésage central destiné à recevoir la périphérie extérieure de la pièce cylindrique (1) et étant pourvu à sa périphérie intérieure d'une pluralité de saillies (21) qui peuvent s'engager dans les gorges de retenue (11); et les moyens de retenue (5, 6, 12) comprenant une gorge d'engrènement (12), disposée circonférentiellement autour de la pièce cylindrique (1), et des moyens d'engrènement (5, 6) qui peuvent s'engager élastiquement dans la gorge d'engrènement (12); caractérisé en ce que la gorge d'engrènement (12) est prévue sur l'un des deux éléments comprenant la pièce cylindrique (1) et le sous-ensemble de pignons (2, 4) et en ce que les moyens d'engrènement (5, 6) sont prévus sur l'autre de ces deux éléments, ledit autre élément comportant des ouvertures radiales (33) espacées sur sa périphérie, formées et disposées de façon à ce que des parties respectives (51) des moyens d'engrènement pénètrent à travers ces ouvertures (33), lorsque l'ensemble (5, 6) est utilisé pour s'engager dans la gorge d'engrènement (12) afin de retenir le sous-ensemble de pignons (2, 4) en position sur la pièce cylindrique (1), de manière à ce qu'il soit axialement immobile par rapport à la pièce cylindrique (1) et de manière à ce que les moyens d'engrènement (5, 6) puissent être dégagés de la gorge d'engrènement (12) pour enlever le sous-ensemble de pignons (2—4) de la pièce cylindrique (1), par une action capable de vaincre les forces élastiques d'engrènement.

2. Ensemble suivant la revendication 1, caractérisé en ce que la gorge d'engrènement (12) est prévue sur la périphérie extérieure de la pièce cylindrique (1) et en ce que les moyens d'engrènement (5, 6) sont prévus sur le sous-ensemble de pignons (2—4).

3. Ensemble suivant la revendication 2, caractérisé en ce que les moyens d'engrènement comprennent un fil élastiquement déformable (5) et sont supportés sur une rondelle (3) du sous-ensemble de pignons (2—4).

4. Ensemble suivant la revendication 3, caractérisé en ce que le sous-ensemble de pignons (2—4) comprend une pluralité de rondelles minces, l'une de ces rondelles qui constitue la rondelle (3) sur laquelle sont supportés les moyens d'engrènement, ayant une épaisseur inférieure à la distance entre des pignons voisins (2) du sous-ensemble de pignons (2—4) et comportant une pluralité de parties axiales (32) de contrôle de la distance espacées les unes des autres à intervalles réguliers de façon à délimiter entre elles lesdites ouvertures radiales (33), les parties de contrôle de la distance (32) présentant chacune des faces d'appui (32a) à chaque extrémité, pour supporter une partie des moyens d'engrènement (5), les moyens d'engrènement (5) comprenant une pluralité de parties rectilignes (51) destinées à s'engrener avec les faces d'appui respectives (32a), les parties rectilignes (51) étant interconnectées de façon à former une pièce sensiblement fermée qui est continue sauf en un seul endroit et passe autour de la pluralité de parties (32) de contrôle de la distance, les parties d'extrémité des parties rectilignes (51) s'appliquant élastiquement contre les faces d'appui (32a) des parties de contrôle de la distance (32) et les parties intermédiaires des parties rectilignes (51) pénétrant radialement vers l'intérieur par rapport à la périphérie intérieure de la rondelle (3), à travers les ouvertures (33), lesdites parties intermédiaires saillantes des parties rectilignes (51) s'engageant dans la gorge d'engrènement (12) de la pièce cylindrique (1).

5. Ensemble suivant la revendication 2, caractérisé en ce que les moyens d'engrènement (5, 6) comprennent une pluralité de fils (5) élastiquement déformables, supportés sur un pignon (3) du sous-ensemble de pignons (2—4).

6. Ensemble suivant la revendication 2, caractérisé en ce que les moyens d'engrènement comprennent une pluralité de blocs d'engrènement maintenus élastiquement en position sur la rondelle (3) du sous-ensemble de pignons (2—4).

7. Ensemble suivant la revendication 6, caractérisé en ce que les ouvertures comprennent une pluralité d'alésages traversants (33) qui traversent radialement la rondelle (3), chacun des blocs d'engrènement (5) ayant une longueur supérieure à celle des alésages traversants (33) et étant supporté de façon à pouvoir se déplacer librement à l'intérieur de l'alésage correspondant et en ce qu'une bague de retenue (6), sensiblement en forme de C, réalisée en fil élastiquement déformable, est disposée autour de la rondelle (3) pour venir en contact avec la surface extérieure radiale de chacun des blocs d'engrènement (5) et rappeler chacun des blocs d'engrènement (5) radialement vers l'intérieur de la rondelle (3), de façon à ce que chacun des blocs d'engrènement s'engage par son extrémité radialement la plus intérieure dans la gorge d'engrènement (12) prévue autour de la pièce cylindrique (1).

8. Ensemble suivant l'une quelconque des revendications 2 à 7, caractérisé en ce que la gorge d'engrènement (12) prévue autour de la pièce cylindrique (1) comporte des parois latérales opposées inclinées, de façon à ce que la gorge (12) soit conique intérieurement en direction de sa base.

**Patentansprüche**

1. Mehrgang-Kettenradanordnung, bestehend aus einem zylindrischen Glied (1), einer auf dem Aussenumfang dieses zylindrischen Glieds (1) angebrachten Kettenraduntergruppe (2—4) und zur Verhinderung von Axialbewegung der Kettenraduntergruppe (2—4) gegenüber dem zylindrischen Glied (1) vorgesehenen Haltemitteln (5, 6, 12), wobei das zylindrische Glied (1) auf seinem Aussenumfang mehrere axial darauf verlaufende Halterillen (11) aufweist, die Kettenraduntergruppe (2—4) zwei oder mehr Kettenräder (2) mit unterschiedlicher Anzahl von Zähnen, eine oder mehrere ringförmige Scheiben (3), die zwischen den Kettenrädern (2) angeordnet sind, um diese in vorgegebener Abstandsbeziehung zu halten, und Kupplungsmittel (4) zum Kuppeln der Kettenräder (2) mit den Scheiben (3) besitzt, die Kettenräder (2) je mit einer zentralen Bohrung zur Aufnahme des Aussenumfangs des besagten zylindrischen Glieds (1) und an deren Innenumfang mit mehreren Ansätzen (21) versehen sind, die mit jenen Halterillen (11) in Eingriff treten können, und die besagten Haltemittel (5, 6, 12) eine um den Umfang des zylindrischen Glieds (1) herum verlaufende Eingriffsrille (12) und eine Eingriffsvorrichtung (5, 6) umfassen, die mit dieser Eingriffsrille (12) federnd in Eingriff treten kann, dadurch gekennzeichnet, dass diese Eingriffsrille (12) auf dem einen von zylindrischem Glied (1) bzw. Kettenraduntergruppe (2—4) und diese Eingriffsvorrichtung (5, 6) auf dem anderen von zylindrischem Glied (1) und Kettenraduntergruppe (2—4) angeordnet sind, wobei das andere von zylindrischem Glied (1) und Kettenraduntergruppe (2—4) mit sich radial erstreckenden, auf Abstand über den Umfang verteilten Oeffnungen (33) versehen ist, die so ausgebildet und angeordnet sind, dass entsprechende Teile (51) dieser Eingriffsvorrichtung durch diese Oeffnungen (33) hindurchragen, wenn die Baugruppe (5, 6) zum Eingriff mit jener Eingriffsrille (12) benutzt wird, um die Kettenraduntergruppe (2—4) in ihrer Stellung auf dem zylindrischen Glied (1) zu halten, so dass sie gegenüber diesem axial unbeweglich ist, und so dass diese Eingriffsvorrichtung (5, 6) ausser Eingriff mit jener Eingriffsrille (12) gebracht werden kann, um die Kettenraduntergruppe (2—4) unter Ueberwindung der federnden Eingriffskräfte von dem besagten zylindrischen Glied (1) abzunehmen.

2. Mehrgang-Kettenradanordnung nach Anspruch 1, worin die Eingriffsrille (12) auf dem Aussenumfang des zylindrischen Glieds (1) und die Eingriffsvorrichtung (5, 6) auf der Kettenraduntergruppe (2—4) angeordnet sind.

3. Mehrgang-Kettenradanordnung nach Anspruch 2, worin diese Eingriffsvorrichtung aus einem elastisch verformbaren Draht (5) besteht und sich auf einer Scheibe (3) jener Kettenraduntergruppe (2—4) abstützt.

4. Mehrgang-Kettenradanordnung nach Anspruch 3, worin die Kettenraduntergruppe (2—4) mehrere dünne Scheiben einschliesst, von denen eine jene eine Scheibe (3) darstellt, auf der sich die besagte Eingriffsvorrichtung abstützt und deren Dicke kleiner ist als der Abstand zwischen benachbarten Kettenrädern (2) der besagten Kettenraduntergruppe (2—4) und die mehrere in regelmässigem Abstand voneinander sich axial erstreckende, jene radial verlaufenden Oeffnungen begrenzende Abstandsregelteile (32) trägt, welche jeweils an beiden Enden Halteflächen (32a) aufweisen, um einen Teil jener Eingriffsvorrichtung (5) abzustützen, die mehrere gerade Teile (51) zum Eingriff mit den entsprechenden Teilen dieser Halteflächen (32a) aufweist, wobei diese geraden Teile (51) so miteinander verbunden sind, dass sie ein weitgehend geschlossenes Glied bilden, das mit Ausnahme eines Teils durchgehend ist und sich um die besagten mehreren Abstandsregelteile (32) herum erstreckt, wobei Endteile dieser geraden Teile (51) elastisch an diesen Halteflächen (32a) der Abstandsregelteile (32) anliegen und dazwischenliegende Teile dieser geraden Teile (51) radial nach innen durch jene Oeffnungen (33) und vom Innenumfang jener Scheibe (3) vorstehen, wobei diese vorstehenden dazwischenliegenden Teile der geraden Teile (51) in der besagten Eingriffsrille (12) auf jenem zylindrischen Glied (1) eingreifen.

5. Mehrgang-Kettenradanordnung nach Anspruch 2, worin diese Eingriffsvorrichtung (5, 6) aus mehreren elastisch verformbaren Drähten (5) besteht und sich auf einem Kettenrad (3) jener Kettenraduntergruppe (2—4) abstützt.

6. Mehrgang-Kettenradanordnung nach Anspruch 2, worin diese Eingriffsvorrichtung aus mehreren Eingriffsblöcken besteht, die elastisch in ihrer Stellung auf der besagten Scheibe (3) jener Kettenraduntergruppe (2—4) gehaltert sind.

7. Mehrgang-Kettenradanordnung nach Anspruch 6, worin die besagten Oeffnungen aus mehreren sich radial durch jene Scheibe (3) erstreckenden Durchgangsbohrungen (33) bestehen, wobei jene Eingriffsblöcke (5) jeweils eine grössere Länge aufweisen als die Durchgangsbohrungen (33) und so abgestützt sind, dass sie darin frei beweglich sind, und ein im allgemeinen C-förmiger Schnappring (6) aus elastisch verformbarem Draht um diese Scheibe (3) herum angeordnet ist, um mit der radial äusseren Oberfläche jedes dieser Eingriffsblöcke (5) in Eingriff zu kommen und diese radial nach innen von dieser Scheibe (3) vorzuspannen, so dass jeder dieser Eingriffsblöcke mit seinem radial innersten Ende in der um jenes zylindrische Glied (1) herum vorgesehenen Eingriffsrille (12) eingreift.

8. Mehrgang-Kettenradanordnung, nach einem der Ansprüche 2 bis 7, worin die besagte, um jenes zylindrische Glied (1) herum vorgesehene Eingriffsrille (12) gegenüberliegende schräge Seitenwände aufweist, so dass sich diese Rille (12) nach innen gegen ihren Boden hin verjüngt.

FIG. 1

FIG. 2

FIG. 3

FIG. 4

2

# Fig. 5